# EUROPÄISCHE PATENTSCHRIFT

(11) **EP 1 980 523 B1**
(45) Veröffentlichungstag und Bekanntmachung des Hinweises auf die Patenterteilung: **07.05.2014**
(21) Anmeldenummer: 08006574.1
(22) Anmeldetag: 31.03.2008
(51) Int. Cl.: B66F 9/08, B66C 13/54, B66F 9/075, B62B 3/06, B62D 51/02, B62D 51/04, B60P 1/02, B62B 5/08

(54) **Hubwagen**
Jack lift
Chariot élévateur

(30) Priorität: 11.04.2007 DE 102007017052
(43) Veröffentlichungstag der Anmeldung: 15.10.2008
(73) Patentinhaber: OM Carrelli Elevatori S.p.A., 20020 Lainate (MI) (IT)
(72) Erfinder: Castagnoli, Fabrizio, 46029 Suzzara MI (IT); Mihajlovic, Goran, 20025 Legnano MI (IT)
(74) Vertreter: Geirhos, Johann

(56) Entgegenhaltungen:
- EP-A- 0 752 354
- JP-A- 2002 145 073
- US-A- 4 913 252
- US-A- 5 117 944
- US-A1- 2004 265 113
- US-A1- 2006 220 334

## Beschreibung

Die Erfindung betrifft einen Hubwagen, insbesondere Niederhubwagen, mit einer Lenkdeichsel, einem einen Fahrantrieb aufweisenden Antriebsteil und einem Lastgabeln aufweisenden Rastteil, das relativ zum Antriebsteil anhebbar und absenkbar ist, wobei an der Lenkdeichsel ein den Fahrantrieb steuernder Fahrschalter angeordnet ist und der Hubwagen einen Mitgängerbetrieb und einen Mitfahrbetrieb ermöglicht.

Aus der US 2006/0220334 A1 ist eine Transportkarre mit einer Plattform bekannt, an der mittels eines Fahrantriebs angetriebene Räder und an einem vorderen Ende eine Deichsel angeordnet ist. Die Plattform ist am vorderen Ende seitlich der Deichsel mit klappbaren Fußpedalen versehen und am hinteren Ende mit einer mittig angeordneten klappbaren Klappe. Gemäß der Figur 6 kann auf der Plattform ein Gepäckstück transportiert werden oder alternativ gemäß der Figur 7 ein Bediener mitfahren. Die Deichsel kann in eine an der Unterseite der Plattform angeordneten Aussparung eingeklappt werden, um den Bauraum des Transportkarrens zu verringern. Durch Ausklappen der Klappe oder der Fußpedale kann je nach Stellung der Deichsel auf der ausgeklappten Klappe bzw. den ausgeklappten Fußpedalen ein Gepäckstück gesichert werden, wenn die Plattform in eine Schräglage angekippt und von der Bedienperson gezogen wird.

Die JP 2002-145073 A offenbart in der Figur 4 einen gattungsgemäßen, als Niederhubwagen ausgebildeten Hubwagen, der für den Mitfahrerbetrieb eine klappbare Fahrerstandplattform aufweist, die am Antriebsteil gegenüberliegend zu einem Lastgabeln aufweisenden Lastteil angeordnet. In der Figur 5 der JP 2002-145073 A ist eine alternative Ausführungsform eines als Niederhubwagen ausgebildeten Hubwagens bekannt, der für den Mitfahrerbetrieb mit einem auf den Lastgabel des Lastteils aufgeschweißten Fahrerplatz versehen ist, der eine Fahrerstandplattform und einen Anlehnhilfe umfasst.

Gattungsgemäße als Niederhubwagen ausgebildete Hubwagen werden im Mitgängerbetrieb betrieben, wobei die Bedienperson neben oder vor dem Hubwagen hergeht und den Hubwagen mittels an der Lenkdeichsel angeordneten Bedienelementen bedient. Insbesondere befindet sich an der Deichsel ein Fahrschalter, mit dem die Fahrgeschwindigkeit in Vorwärts- oder Rückwärtsrichtung gesteuert werden kann. Durch Schwenken der Deichsel um eine im wesentlichen vertikale Achse kann der Hubwagen gelenkt werden. Hierzu besteht eine mechanische oder elektrische Wirkverbindung, mit der eine Schwenkbewegung der Deichsel um die vertikale Achse auf das gelenkte Rad des Hubwagens übertragen wird.

Im Betrieb derartiger Hubwagen kommt es jedoch oft vor, dass sich die Bedienperson auf die Lastgabeln des Lastteils stellt, um mit dem Hubwagen, insbesondere im unbeladenen Zustand, zu fahren. Ein derartiger, für den Hubwagen nicht vorgesehener Mitfahrbetrieb des Hubwagens kann jedoch zu gefährlichen Betriebszuständen führen und weist eine hohe Unfallgefahr für die Bedienperson auf.

Der vorliegenden Erfindung liegt die Aufgabe zugrunde, einen Hubwagen der eingangs genannten Gattung zur Verfügung zu stellen, der mit geringem Bauaufwand einen Mitfahrbetrieb mit einer hohen Betriebssicherheit ermöglicht.

Diese Aufgabe wird erfindungsgemäß dadurch gelöst, dass der Hubwagen für den Mitfahrbetrieb mit einer klappbaren Fahrerstandplattform versehen ist, die an dem die Lastgabeln aufweisenden Lastteil angeordnet ist. Eine derartige Fahrerstandplattform, die am Lastteil klappbar angeordnet ist, weist einen geringen Bauaufwand und Herstellkosten auf und ermöglicht somit auf einfache Weise einen für die Bedienperson sicheren Mitfahrbetrieb des Hubwagens, wodurch mit geringem Bauaufwand ein Mitfahrbetrieb des Hubwagens mit einer hohen Betriebssicherheit des Hubwagens erzielt wird. Gegenüber Hubwagen mit einer am Antriebsteil im Bereich der Lenkdeichsel angeordneten klappbare Fahrerstandplattform weist der erfindungsgemäße Hubwagen mit einer am Lastteil angeordneten klappbaren Fahrerstandplattform im Mitfahrbetrieb bei auf der Fahrerstandplattform befindlicher Bedienperson geringe Abmessungen in Längsrichtung des Hubwagens auf.

Gemäß einer bevorzugten Ausführungsform der Erfindung ist die Fahrerstandplattform am Lastteil, insbesondere im Bereich eines Batteriefaches des Lastteils, um eine quer zur Längsachse des Hubwagens im wesentlichen horizontale Schwenkachse schwenkbar gelagert. Hierdurch kann mit geringem Bauaufwand eine klappbare Fahrerstandplattform am Lastteil schwenkbar angeordnet werden.

Besondere Vorteile sind erzielbar, wenn die Fahrerstandplattform in einer ausgeschwenkten Position auf den Lastgabeln des Lastteils aufliegt. Hierdurch ergibt sich ein geringer Bauaufwand für die Fahrerstandplattform, da die Fahrerstandplattform als einfache Blechplatte ausgebildet werden kann, die sich in ausgeschwenkter Position auf den Lastgabeln des Lastteils abstützt.

Gemäß einer bevorzugten Weiterbildung der Erfindung steht die Fahrerstandplattform mit einer das Vorhandensein einer Bedienperson erfassenden Sensoreinrichtung in Wirkverbindung. Mit einer derartigen Sensoreinrichtung kann der Mitfahrbetrieb auf einfache Weise ermittelt werden und eine Ansteuerung des Fahrantriebs im Mitfahrbetrieb ermöglicht werden.

In einer vorteilhaften Ausführungsform der Erfindung ist vorgesehen, dass die Sensoreinrichtung als ein die ausgeschwenkte Position der Fahrerstandplattform erfassender Sensor ausgebildet ist. Mit einem derartigen Sensor, der beispielsweise an der Fahrerstandplattform im Bereich der Schwenkachse angeordnet ist und als Schaltelement ausgebildet ist, das die ausgeschwenkte Position der Fahrerstandplattform ermittelt, kann mit geringem Bauaufwand die Stellung der Fahrerstandplattform und somit der Mitfahrbetrieb des Hubwagens ermittelt werden.

Gemäß einer bevorzugten Weiterbildung der Erfindung vorgesehen, dass die Lenkdeichsel mit einem Fahrbereich für den Mitfahrbetrieb versehen ist, der angrenzend zu einer oberen Endposition der Lenkdeichsel angeordnet ist. In der oberen Endposition der Lenkdeichsel ist bei gattungsgemäßen Hubwagen eine Bremseinrichtung des Hubwagens betätigt, wobei der Fahrantrieb bei einer Betätigung des Fahrschalters nicht angesteuert werden kann. Durch die Ausbildung eines Fahrbereichs für den Mitfahrbetrieb an der Lenkdeichsel des Hubwagens, der angrenzend zu der oberen Endposition der Lenkdeichsel ausgebildet ist, wird auf einfache Weise ein sicherer Betrieb des Hubwagens im Mitfahrbetrieb erzielt, da ausgehend von dem Mitfahrbetrieb, wobei sich die Lenkdeichsel in dem Fahrbereich befindet, bei einem Loslassen der Lenkdeichsel durch die Bedienperson eine automatische Beaufschlagung der Lenkdeichsel in die obere Endposition und somit eine zwangsweise Abbremsung des Hubwagens durch die Bremseinrichtung erzielt werden kann.

Besondere Vorteile ergeben sich, wenn die Lenkdeichsel ausgehend von der oberen Endposition durch Neigen in Richtung des Lastteils in den Fahrbereich für den Mitfahrbetrieb beaufschlagbar ist. Bei gattungsgemäßen Hubwagen wird ein Fahrbereich für den Mitgängerbetrieb erzielt, indem die Lenkdeichsel ausgehend von der oberen Endposition in Richtung des Antriebsteils beaufschlagt wird. Durch die Ausbildung des Fahrbereichs für den Mitfahrbetrieb durch eine Beaufschlagung der Lenkdeichsel in Richtung des Lastteils kann auf einfache Weise an der Lenkdeichsel ein Fahrbereich für den Mitfahrbereich erzielt werden, der unabhängig von dem Fahrbereich für den Mitgängerbetrieb ist und bei einer auf der ausgeschwenkten Fahrerstandplattform befindlichen Bedienperson eine ergonomische Bedienung des Hubwagens mittels der Lenkdeichsel ermöglicht.

Eine sicherer Betrieb des Hubwagens im Mitfahrbetrieb wird erzielt, wenn gemäß einer Weiterbildung der Erfindung bei in den Fahrbereich für den Mitfahrbetrieb beaufschlagter Lenkdeichsel und einer Betätigung der als Sensor ausgebildeten Sensoreinrichtung der Fahrantrieb bei Betätigung des Fahrschalters ansteuerbar ist.

Gemäß einer bevorzugten Ausführungsform der Erfindung ist die Sensoreinrichtung als ein an der Fahrerstandplattform angeordneter Totmannschalter ausgebildet. Mit einem an der Fahrerstandplattform angeordneten Totmannschalter, der von der auf der Fahrerstandplattform stehenden Bedienperson, betätigbar ist, beispielsweise mittels eines Fußes, ist auf einfache Weise ein Mitfahrbetrieb des Hubwagens ermittelbar.

Hierbei ergibt sich ein sicherer Betrieb des Hubwagens im Mitfahrbetrieb, wenn bei in der oberen Endposition befindlicher Lenkdeichsel und/oder bei in den Fahrbereich für den Mitfahrbetrieb beaufschlagter Lenkdeichsel und einer Betätigung der als Totmannschalter ausgebildeten Sensoreinrichtung der Fahrantrieb bei Betätigung des Fahrschalters ansteuerbar ist. Sofern mittels des Totmanschalters im nicht betätigten Zustand eine Bremseinrichtung des Hubwagens betätigbar ist, kann ebenfalls bei in der oberen Endstellung befindlicher Lenkdeichsel und betätigtem Totmannschalter ein Mitfahrbetrieb ermittelt werden und somit eine Ansteuerung des Fahrantriebs mittels des Fahrschalters zugelassen werden. Durch Loslassen des Totmannschalters kann hierbei eine zwangsweise Abbremsung des Hubwagnes mittels der Bremseinrichtung erzielt werden.

Gemäß einer vorteilhaften Weiterbildung der Erfindung ist bei betätigter Sensoreinrichtung der Fahrantrieb bei Betätigung des Fahrschalters lediglich in Vorwärtsrichtung des Hubwagens ansteuerbar. Die Vorwärtsrichtung des Hubwagens entspricht hierbei der Fahrtrichtung des Hubwagens, die der Blickrichtung der Bedienperson im Mitfahrbetrieb entspricht, wobei sich die Bedienperson auf der Fahrerstandplattform befindet und den Fahrschalter an der Lenkdeichsel betätigt.

In Weiterbildung der Erfindung ist vorgesehen, dass bei einer Betätigung der Sensoreinrichtung ein den Lastteil anhebender bzw. absenkender Hubantrieb nicht ansteuerbar ist. Im Mitfahrbetrieb des Hubwagens, wobei die Sensoreinrichtung eine auf der Fahrerstandplattform befindliche Bedienperson ermittelt, wird somit eine Betätigung des Hubantriebs und somit eine Anheben bzw. Absenken des Lastteils vermieden, wodurch eine hohe Betriebssicherheit erzielt wird.

Gemäß einer vorteilhaften Weiterbildung der Erfindung ist bei einer Betätigung der Sensoreinrichtung der Fahrantrieb bei Betätigung des Fahrschalters mit einer gegenüber dem Mitgängerbetrieb erhöhten maximalen Fahrgeschwindigkeit betreibbar. Im Mitgängerbetrieb ist die maximale Fahrgeschwindigkeit auf einen Wert von 6 km/h begrenzt. Bei einer Betätigung der Sensoreinrichtung kann der Mitfahrbetrieb des Hubwagens auf einfache Weise ermittelt werden und somit auf einfache Weise im Mitfahrbetrieb eine gegenüber dem Mitgängerbetrieb erhöhte maximale Fahrgeschwindigkeit erzielt werden.

Weitere Vorteile und Einzelheiten der Erfindung werden anhand des in den schematischen Figuren dargestellten Ausführungsbeispiels näher erläutert. Hierbei zeigt
- Figur 1: einen erfindungsgemäßen Hubwagen mit einer in der ausgeschwenkten Position befindlichen Fahrerstandplattform und
- Figur 2: einen erfindungsgemäßen Hubwagen mit einer in der eingeschwenkten Position befindlichen Fahrerstandplattform.

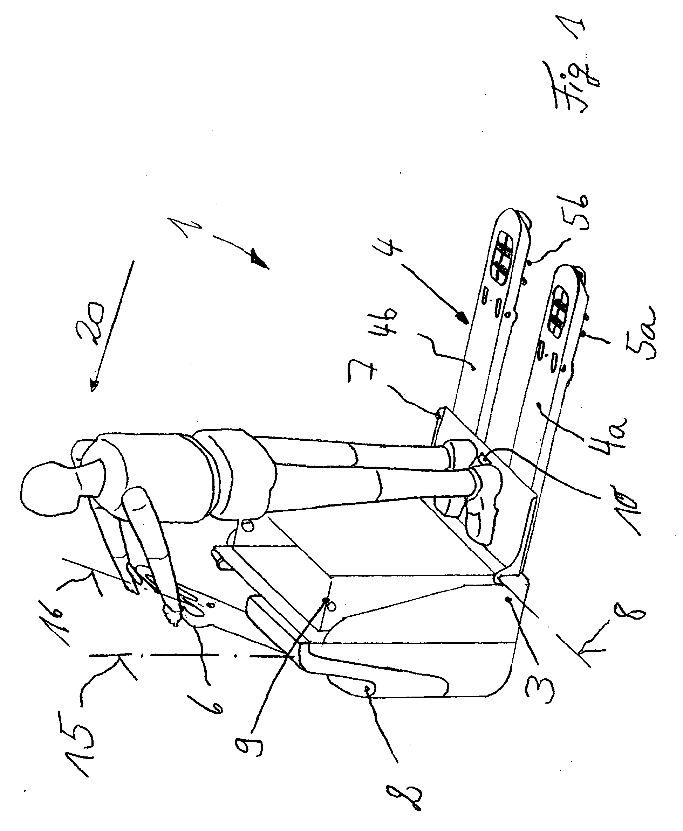

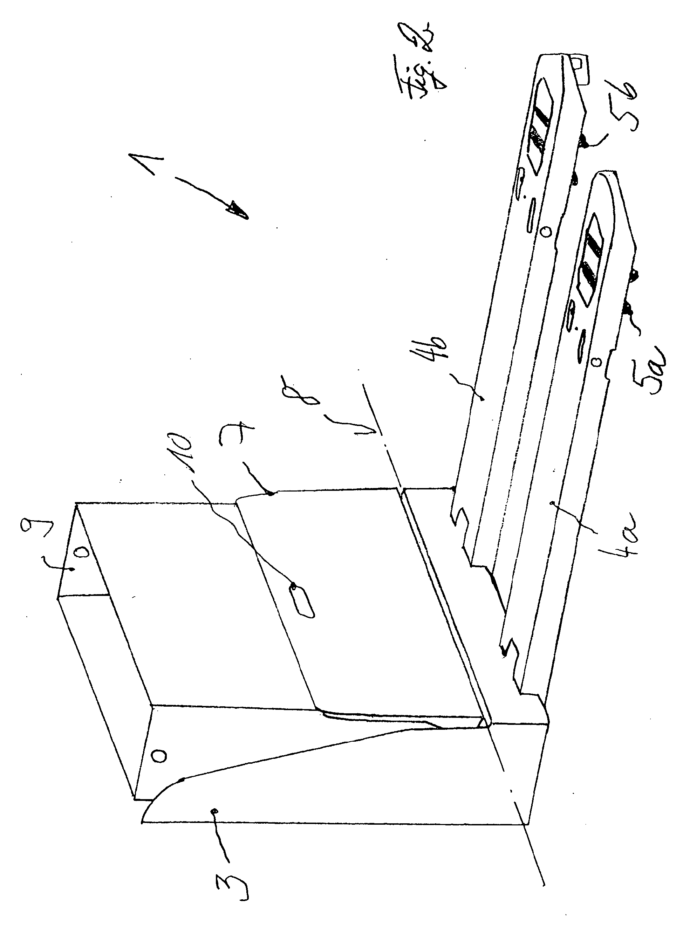

Die Figuren 1 und 2 zeigen einen erfindungsgemäßen als Niederhubwagen ausgebildeten Hubwagen 1. Der Hubwagen 1 weist - wie aus der Figur 1 ersichtlich ist - einen Antriebsteil 2 mit einem nicht mehr dargestellten Fahrantrieb auf, der mit einem nicht mehr gezeigten Antriebsrad in Wirkverbindung steht. In Längsrichtung des Hubwagens 1 schließt sich an den Antriebsteil 2 ein Lastteil 4 an, der mit einem benachbart zum Antriebsteil 2 angeordneten Batteriefach 3 versehen ist, in dem ein Batterieblock 9 angeordnet werden kann. Der Lastteil 4 weist weiterhin in Längsrichtung des Hubwagens 1 benachbart zu dem Batteriefach 3 zwei beabstandete Lastgabeln 4a, 4b auf, die sich mittels Lastrollen 5a, 5b auf der Fahrbahn abstützen. Der von den Lastgabeln 4a, 4b und dem Batteriefach 3 gebildete Lastteil 4 kann hierbei relativ zum Antriebsteil 2 angehoben und abgesenkt werden.

Die Steuerung des Hubwagens durch die Bedienperson erfolgt über eine Lenkdeichsel 6, die am Antriebsteil 1 angeordnet ist. Die Lenkdeichsel 6 ist mit Bedienelementen zur Steuerung des Hubwagens versehen, beispielsweise einem den Fahrantrieb des Hubwagens 1 steuernden Fahrschalter und einen Hubantrieb steuernde Heben- bzw. Senkenschalter, wobei mittels des Hubantriebs der Lastteil 4 anhebbar bzw. absenkbar ist. Gelenkt wird der Hubwagen 1, indem die Lenkdeichsel 6 um eine im wesentlichen vertikale Achse relativ zum Antriebsteil 2 geschwenkt wird. Diese Lenkbewegung die Lenkdeichsel 6 wird mechanisch oder elektrisch auf das Antriebsrad übertragen.

Erfindungsgemäß ist der Hubwagen 2 mit einer klappbaren Fahrerstandplattform 7 versehen, die am Lastteil 4 im Bereich des Batteriefaches 3 angeordnet ist. Die Fahrerstandplattform 7 ist hierbei um eine quer zur Längsachse des Hubwagens 1 im wesentlichen horizontale Schwenkachse 8 schwenkbar am Lastteil 4 im Bereich des Batteriefaches 3 gelagert.

In der Figur 2 befindet sich die Fahrerstandplattform 7 in einer eingeschwenkten Position, in der die Fahrerstandplattform 7 im wesentlichen senkrecht angeordnet ist. In dieser eingeschwenkten Position der Fahrerstandplattform 7 wird ein Mitgängerbetrieb des Hubwagens 1 ermöglicht. Die Bedienperson kann hierbei neben oder vor dem Hubwagen 1 hergehen und den Hubwagen 1 mittels der an der Lenkdeichsel 6 angeordneten Bedienelementen bedienen.

In der Figur 1 ist die Fahrerstandplattform 7 in einer ausgeschwenkten Position dargestellt. Die Fahrerstandplattform 7 erstreckt sich hierbei in Richtung der Lastgabeln 4a, 4b des Lastteils 4 und liegt in der ausgeschwenkten Position auf den Lastgabeln 4a, 4b des Lastteils 4 auf.

Die Fahrerstandplattform 7 kann mittels einer nicht mehr dargestellten Federeinrichtung, beispielsweise einer Gasdruckfeder, in die in der Figur 2 eingeschwenkte Position beaufschlagt sein. Zum Herunterklappen der Fahrerstandplattform 7 in die in der Figur 1 dargestellte ausgeschwenkte Position ist die Fahrerstandplattform 7 mit einer Griffmulde 10 versehen, die vorzugsweise derart angeordnet ist, dass sich die Griffmulde 10 in der ausgeschwenkten Position der Fahrerstandplattform 7 zwischen den Lastgabeln 4a, 4b des Lastteils 4 befindet.

Die Fahrerstandplattform 7 ist hierbei mit einer nicht mehr dargestellten das Vorhandensein einer Bedienperson erfassenden Sensoreinrichtung versehen. Die Sensoreinrichtung kann als ein die ausgeschwenkte Position der Fahrerstandplattform 7 erfassender Sensor, beispielsweise ein Schalter, ausgebildet sein, der im Bereich der Schwenkachse 8 angeordnet ist.

Zudem ist es möglich, die Sensoreinrichtung als einen an der Fahrerstandplattform 7 angeordneten Totmannschalter auszubilden, der von einer auf der Fahrerstandplattform 7 stehenden Bedienperson betätigbar ist, beispielsweise einem von einem Fuß der Bedienperson zu betätigenden Totmannschalter.

In der in der Figur 1 dargestellten ausgeschwenkten Position der Fahrerstandplattform 7 wird ein Mitfahrbetrieb des Hubwagens 1 ermöglicht. Die Bedienperson befindet sich hierbei auf der Fahrerstandplattform 7, wobei die Blickrichtung der Bedienperson der Vorwärtsfahrtrichtung 20 des Hubwagens entspricht.

In einer oberen Endposition 15 der Lenkdeichsel 6, die als senkrechte Position der Lenkdeichsel 6 ausgbildet sein kann, ist bei einem gattungsgemäßen Hubwagen normalerweise eine Bremseinrichtung des Hubwagens 1 betätigt und mittels des an der Lenkdeichsel 6 angeordneten Fahrschalters der Fahrantrieb nicht ansteuerbar.

Der erfindungsgemäße Hubwagen 1 ist nunmehr derart ausgebildet, dass bei in der oberen Endposition befindlicher Lenkdeichsel 6 und betätigter Sensoreinrichtung, beispielsweise einem Totmannschalter, der Fahrantrieb bei einer Betätigung des an der Lenkdeichsel 6 angeordneten Fahrschalters ansteuerbar ist. Durch eine Betätigung des Totmannschalters wird somit die ausgeschwenkte Position der Fahrerstandplattform 7 bzw. eine auf der Fahrerstandplattform 7 befindliche Bedienperson erkannt, wodurch ein Mitfahrbetrieb des Hubwagens 1 sicher ermittelt werden kann und bei einer Betätigung des an der Lenkdeichsel 6 angeordneten Fahrschalters der Fahrantrieb angesteuert werden kann. Durch Loslassen des Totmannschalters kann hierbei ein Abbremsen des Hubwagens 1 erzielt werden.

Zudem kann die Lenkdeichsel 6 benachbart zu der oberen Endposition 15 mit einem Fahrbereich 16 für den Mitfahrbereich versehen werden, wobei die Lenkdeichsel 6 ausgehend von der oberen Endposition 15 durch Neigen in Richtung des Lastteils 4 in den Fahrbereich 16 für den Mitfahrbetrieb bringbar ist. Bei betätigter Sensoreinrichtung, beispielsweise einem die ausgeschwenkte Position der Fahrerstandplattform erfassenden Sensor, und in den Fahrbereich 16 für den Mitfahrbetrieb ausgelenkter Lenkdeichsel 6 kann hierbei durch einer Betätigung des Fahrschalters der Fahrantrieb angesteuert werden. Beim Loslassen der Lenkdeichsel 6 wird hierbei erzielt, dass die Lenkdeichsel 6 in die obere Endposition 15 beaufschlagt wird und durch eine Betätigung der Bremseinrichtung ein Abbremsen des Hubwagens erzielt werden kann.

Zur Erhöhung der Sicherheit ist bei dem erfindungsgemäßen Hubwagen 1 im Mitfahrbetrieb der Fahrantrieb lediglich in Vorwärtsfahrtrichtung 20 ansteuerbar. Zudem ist im Mitfahrbetrieb der Hubantrieb des Hubwagens 1 nicht ansteuerbar.

In dem Mitfahrbetrieb des Hubwagens 1 kann hierbei der Fahrantrieb mit einer maximalen Fahrgeschwindigkeit betrieben werden, die gegenüber der maximalen Fahrgeschwindigkeit von beispielsweise 6 km/h im Mitgängerbetrieb erhöht ist.

Alternativ zur schwenkbaren Anordnung der Fahrerstandplattform 7 im Bereich des Batteriefaches kann die Fahrerstandplattform 7 ebenfalls direkt an den Lastgabeln 4a, 4b des Lastteils 4 schwenkbar gelagert werden.

## Patentansprüche

1. Hubwagen (1), insbesondere Niederhubwagen, mit einer Lenkdeichsel (6), einem einen Fahrantrieb aufweisenden Antriebsteil (2) und einem Lastgabeln (4a; 4b) aufweisenden Lastteil (4), das relativ zum Antriebsteil (2) anhebbar und absenkbar ist, wobei an der Lenkdeichsel (6) ein den Fahrantrieb steuernder Fahrschalter angeordnet ist und der Hubwagen (1) einen Mitgängerbetrieb und einen Mitfahrbetrieb ermtiglicht, dadurch geicennzeichnet, dass der Hubwagen (1) für den Mitfahrbetrieb mit einer klappbaren Fahrerstandplattform (7) versehen ist, die an dem die Lastgabeln (4a; 4b) aufweisenden Lastteil (4) angeordnet ist.

2. Hubwagen nach Anspruch 1, **dadurch gekennzeichnet, dass** die Fahrerstandplattform (7) am Lastteil (4), insbesondere im Bereich eines Batteriefaches (3) des Lastteils (4), um eine quer zur Längsachse des Hubwagens (1) im wesentlichen horizontale Schwenkachse (8) schwenkbar gelagert ist.

3. Hubwagen nach Anspruch 1 oder 2, **dadurch gekennzeichnet, dass** die Fahrerstandplattform (7) in einer ausgeschwenkten Position auf den Lastgabeln (4a; 4b) des Lastteils (4) aufliegt.

4. Hubwagen nach einem der Ansprüche 1 bis 3, **dadurch gekennzeichnet, dass** die Fahrerstandplattform (7) mit einem das Vorhandensein einer Bedienperson erfassenden Sensoreinrichtung in Wirkverbindung steht.

5. Hubwagen nach Anspruch 4, **dadurch gekennzeichnet, dass** die Sensoreinrichtung als ein die ausgeschwenkte Position der Fahrerstandplattform (7) erfassender Sensor ausgebildet ist.

6. Hubwagen nach Anspruch 5, **dadurch gekennzeichnet, dass** die Lenkdeichsel mit einem Fahrbereich (16) für den Mitfahrbetrieb versehen ist, der angrenzend zu einer oberen Endposition (15) der Lenkdeichsel (6) angeordnet ist.

7. Hubwagen nach Anspruch 6, **dadurch gekennzeichnet, dass** die Lenkdeichsel ausgehend von der oberen Endposition (15) durch Neigen in Richtung des Lastteils (4) in den Fahrbereich (16) für den Mitfahrbetrieb beaufschlagbar ist.

8. Hubwagen nach einem der Ansprüche 5 bis 7, **dadurch gekennzeichnet, dass** bei in den Fahrbereich (16) für den Mitfahrbetrieb beaufschlagter Lenkdeichsel (6) und einer Betätigung der als Sensor ausgebildeten Sensoreinrichtung der Fahrantrieb bei Betätigung des Fahrschalters ansteuerbar ist.

9. Hubwagen nach Anspruch 4, **dadurch gekennzeichnet, dass** die Sensoreinrichtung als ein an der Fahrerstandplattform (7) angeordneter Totmannschalter ausgebildet ist.

10. Hubwagen nach Anspruch 9, **dadurch gekennzeichnet, dass** bei in der oberen Endposition (15) befindlicher Lenkdeichsel (6) und/oder bei in den Fahrbereich (16) für den Mitfahrbetrieb beaufschlagter Lenkdeichsel (6) und einer Betätigung der als Totmannschalter ausgebildeten Sensoreinrichtung der Fahrantrieb bei Betätigung des Fahrschalters ansteuerbar ist.

11. Hubwagen nach einem der Ansprüche 4 bis 10, **dadurch gekennzeichnet, dass** bei betätigter Sensoreinrichtung der Fahrantrieb bei Betätigung des Fahrschalters lediglich in Vorwärtsrichtung (20) des Hubwagens (1) ansteuerbar ist.

12. Hubwagen nach einem der Ansprüche 4 bis 11, **dadurch gekennzeichnet, dass** bei einer Betätigung der Sensoreinrichtung ein den Lastteil (4) anhebender bzw. absenkender Hubantrieb nicht ansteuerbar ist.

13. Hubwagen nach einem der Ansprüche 4 bis 12, **dadurch gekennzeichnet, dass** bei einer Betätigung der Sensoreinrichtung der Fahrantrieb bei Betätigung des Fahrschalters mit einer gegenüber dem Mitgängerbetrieb erhöhten maximalen Fahrgeschwindigkeit betreibbar ist.

## Claims

1. Lift truck (1), in particular low-platform truck, having a steering shaft (6), a drive part (2) which has a traction drive, and a load part (4) which has load forks (4a; 4b) and which can be raised and lowered relative to the drive part (2), wherein a control switch which controls the traction drive is arranged on the steering shaft (6), and the lift truck (1) permits a pedestrian-controlled mode and a ride mode, **characterized in that** the lift truck (1) is provided with a foldable driver's position platform (7) for the ride mode, which driver's position platform (7) is arranged on the load part (4) having the load forks (4a; 4b).

2. Lift truck according to Claim 1, **characterized in that** the driver's position platform (7) is mounted on the load part (4), in particular in the region of a battery compartment (3) of the load part (4), so as to be pivotable about a pivoting axis (8) which is essentially horizontal in the transverse direction with respect to the longitudinal axis of the lift truck (1).

3. Lift truck according to Claim 1 or 2, **characterized in that** in a pivoted-out position the driver's position platform (7) rests on the load forks (4a; 4b) of the load part (4).

4. Lift truck according to one of Claims 1 to 3, **characterized in that** the driver's position platform (7) is operatively connected to a sensor device which senses the presence of an operator.

5. Lift truck according to Claim 4, **characterized in that** the sensor device is embodied as a sensor which senses the pivoted-out position of the driver's position platform (7).

6. Lift truck according to Claim 5, **characterized in that** the steering shaft is provided with a driving region (16) for the ride mode, which driving region (16) is arranged adjacent to an upper end position (15) of the steering shaft (6).

7. Lift truck according to Claim 6, **characterized in that** the steering shaft can be moved into the driving region (16) for the ride mode from the upper end position (15) by inclination in the direction of the load part (4).

8. Lift truck according to one of Claims 5 to 7, **characterized in that** when the steering shaft (6) is moved into the driving region (16) for the ride mode and the sensor device which is embodied as a sensor is activated, the traction drive can be actuated when the control switch is activated.

9. Lift truck according to Claim 4, **characterized in that** the sensor device is embodied as a dead man's switch which is arranged on the driver's position platform (7).

10. Lift truck according to Claim 9, **characterized in that**, when the steering shaft (6) is located in the upper end position (15) and/or when the steering shaft (6) is moved into the driving region (16) for the ride mode and the sensor device which is embodied as a dead man's switch is activated, the traction drive can be actuated when the control switch is activated.

11. Lift truck according to one of Claims 4 to 10, **characterized in that** when the sensor device is activated, the traction drive can be actuated only in the forward direction (20) of the lift truck (1) when the control switch is activated.

12. Lift truck according to one of Claims 4 to 11, **characterized in that** when the sensor device is activated, a lift drive which raises or lowers the load part (4) cannot be actuated.

13. Lift truck according to one of Claims 4 to 12, **characterized in that** when the sensor device is activated, the traction drive can be operated with a maximum velocity which is increased compared to the pedestrian-controlled mode, when the control switch is activated.

## Revendications

1. Chariot élévateur (1), en particulier chariot à faible levée, comprenant un timon de direction (6), une partie d'entraînement (2) présentant un entraînement de conduite et une partie de charge (4) présentant des fourches de charge (4a ; 4b), laquelle peut être soulevée et abaissée par rapport à la partie d'entraînement (2), un interrupteur de marche commandant l'entraînement de conduite étant disposé sur le timon de direction (6) et le chariot élévateur (1) permettant un fonctionnement à conducteur accompagnant et un fonctionnement à conducteur porté, **caractérisé en ce que** le chariot élévateur (1), pour le fonctionnement à conducteur porté, est pourvu d'une plate-forme de station debout (7) rabattable pour le conducteur, laquelle est disposée sur la partie de charge (4) présentant les fourches de charge (4a ; 4b).

2. Chariot élévateur selon la revendication 1, **caractérisé en ce que** la plate-forme de station debout (7) pour le conducteur est supportée sur la partie de charge (4), notamment dans la région d'un compartiment de batterie (3) de la partie de charge (4), de manière à pouvoir pivoter autour d'un axe de pivotement (8) essentiellement horizontal transversalement à l'axe longitudinal du chariot élévateur (1).

3. Chariot élévateur selon la revendication 1 ou 2, **caractérisé en ce que** la plate-forme de station debout (7) pour le conducteur repose dans une position sortie par pivotement sur les fourches de charge (4a ; 4b) de la partie de charge (4).

4. Chariot élévateur selon l'une quelconque des revendications 1 à 3, **caractérisé en ce que** la plate-forme de station debout (7) pour le conducteur est en liaison fonctionnelle avec un dispositif de détection détectant la présence d'un opérateur.

5. Chariot élévateur selon la revendication 4, **caractérisé en ce que** le dispositif de détection est réalisé sous la forme d'un capteur détectant la position sortie par pivotement de la plate-forme de station debout (7) pour le conducteur.

6. Chariot élévateur selon la revendication 5, **caractérisé en ce que** le timon de direction est pourvu d'une région de conduite (16) pour le fonctionnement à conducteur porté, laquelle est disposée en position adjacente à une position de fin de course supérieure (15) du timon de direction (6).

7. Chariot élévateur selon la revendication 6, **caractérisé en ce que** le timon de direction peut être sollicité à partir de la position de fin de course supérieure (15) par inclinaison dans la direction de la partie de charge (4) dans la région de conduite (16) pour le fonctionnement à conducteur porté.

8. Chariot élévateur selon l'une quelconque des revendications 5 à 7, **caractérisé en ce que** dans le cas d'un timon de direction (6) sollicité dans la région de conduite (16) pour le fonctionnement à conducteur porté et d'un actionnement du dispositif de détection réalisé sous forme de capteur, l'entraînement de conduite peut être commandé par actionnement de l'interrupteur de marche.

9. Chariot élévateur selon la revendication 4, **caractérisé en ce que** le dispositif de détection est réalisé sous forme d'interrupteur d'homme mort disposé sur la plate-forme de station debout (7) pour le conducteur.

10. Chariot élévateur selon la revendication 9, **caractérisé en ce que** dans le cas d'un timon de direction (6) se trouvant dans la position de fin de course supérieure (15) et/ou dans le cas d'un timon de direction (6) sollicité dans la région de conduite (16) pour le fonctionnement à conducteur porté et d'un actionnement du dispositif de détection réalisé sous forme d'interrupteur d'homme mort, l'entraînement de conduite peut être commandé par actionnement de l'interrupteur de marche.

11. Chariot élévateur selon l'une quelconque des revendications 4 à 10, **caractérisé en ce que** dans le cas d'un dispositif de détection de l'entraînement de conduite activé, l'entraînement de conduite peut être commandé lors de l'actionnement de l'interrupteur de marche seulement dans la direction de marche avant (20) du chariot élévateur (1).

12. Chariot élévateur selon l'une quelconque des revendications 4 à 11, **caractérisé en ce que** dans le cas d'un actionnement du dispositif de détection, un entraînement de levage soulevant ou abaissant la partie de charge (4) ne peut pas être commandé.

13. Chariot élévateur selon l'une quelconque des revendications 4 à 12, **caractérisé en ce que** dans le cas d'un actionnement du dispositif de détection, l'entraînement de conduite peut fonctionner lors de l'actionnement de l'interrupteur de marche avec une vitesse de conduite maximale accrue par rapport au fonctionnement à conducteur accompagnant.
